# EUROPEAN PATENT SPECIFICATION

(11) **EP 2 776 516 B1**
(45) Date of publication and mention of the grant of the patent: **28.12.2022**
(21) Application number: 12780505.9
(22) Date of filing: 06.11.2012
(51) Int. Cl.: C09B 69/10, C09D 11/00, G07D 7/00

(54) **POLYMER BONDED VAT DYES**
POLYMERGEBUNDENE KÜPENFARBSTOFFE
COLORANTS DU CUVE LIÉS PAR POLYMÈRE

(30) Priority: 10.11.2011 WO PCT/EP2011/069884
(43) Date of publication of application: 17.09.2014
(73) Proprietor: SICPA HOLDING SA, 1008 Prilly (CH)
(72) Inventor: MARGUERETTAZ, Xavier, CH-1920 Martigny (CH); PASQUIER, Cécile, CH-1723 Marly (CH); FANKHAUSER, Catherine, CH-1279 Chavannes-de-Bogis (CH); COMMEUREUC, Aurélien, CH-1123 Aclens (CH); TILLER, Thomas, CH-1030 Bussigny (CH); WYSS, Patrick, CH-1680 Romont (CH); CHRISTINAT, Alexia, CH-1020 Renens (CH); GRIVEL, Aurélie, CH-1700 Fribourg (CH); CHILLAT, Philippe, F-74520 Valleiry (FR)
(74) Representative: GatesIP
(86) International application number: PCT/EP2012/071882
(87) International publication number: WO 2013/068324

(56) References cited:
- EP-A1- 0 422 535
- EP-A2- 1 650 273
- WO-A1-99/21937
- WO-A1-2011/147857
- WO-A1-2012/160182
- DE-A1- 2 301 638
- DE-A1- 10 233 179
- FR-A- 1 387 057
- FR-A- 1 546 468
- FR-A1- 2 850 651
- MARECHAL E: "Polymeric Dyes - Synthesis, Properties and Uses", PROGRESS IN ORGANIC COATING, ELSEVIER, NL, vol. 10, 1 January 1982 (1982-01-01), pages 251-287, XP002651835, ISSN: 0033-0655

## Description

### BACKGROUND OF THE INVENTION

### 1. Field of the Invention

The present invention relates to vat dyes which are covalently bonded to polymeric moieties and in particular, polymeric moieties which increase the solubility and/or dispersibility of the vat dyes in polar solvent media, and to the use of these polymer-bonded vat dyes in compositions for printing and dying fabrics and fibers.

### 2. Discussion of Background Information

Counterfeiting and market diversion of mass produced goods are facilitated if the products are handled on a lot base rather than on an individual item base. In such case counterfeit or diverted products are easily introduced into the supply chain. Producers and retailers would like to be in a position to distinguish their original products from such counterfeit or diverted (parallel imported or smuggled) products at the level of the individual unit that is sold.

Further, secure documents such as currency, passports, or identity cards are increasingly counterfeit around the world. This situation is a very critical issue for governments and society in general. For example criminal organizations may use fake passports or identity cards for human beings traffic. As reprographic technologies become more and more sophisticated, it becomes even more difficult to make a clear distinction between a fake document and the original. Document security has therefore a considerable impact on the economy of the countries and also on the victims of illicit traffic involving counterfeit documents.

In an attempt to prevent counterfeiting, marking is currently used extensively for the recognition, identification and authentication of individual items. The marking may be applied, for example, in the form of indicia such as 1-dimensional barcodes, stacked 1-dimensional barcodes, 2-dimensional barcodes, 3-dimensional barcodes, a data matrix. and the like. The application of markings is frequently carried out by a printing process which uses a printing ink with specific optical properties that are imparted to the ink by one or more substances contained therein such as, e.g., luminescent dyes and pigments and cholesteric liquid crystal compounds.

A class of compounds which is suitable for use in, e.g., printing inks for marking purposes are vat dyes. The term "vat dye" generally encompasses reducible dyes such as highly condensed and heterocylic benzoquinones and naphthoquinones as well as anthraquinoid and indigo dyes. The most important vat dyes are derivatives of anthraquinones, either substituted anthraquinones or higher anellated derivatives and related analogous compounds. They usually comprise at least two keto groups (C=O) which are part of a conjugated system and usually have to be reduced to their leuco form (which often is colorless or at least less intensively colored than the oxidized form) and applied from a neutral or alkaline matrix, i.e., a solution or paste, before being reoxidized to provide their coloring effect. Vat dyes may be used for bath dyeing, i.e., by immersion of fabrics in aqueous dye solutions, and for printing, mainly in the form of pastes.

As set forth above, a drawback of vat dyes is their often unsatisfactorily low solubility or dispersibility in liquid media such as those which are useful in printing inks. This low solubility/dispersibility limits the suitability of these compounds as colorants for liquid compositions in general and in particular, for use in printing compositions. It would thus, be advantageous to be able to increase the solubility and/or dispersibility of vat dyes in liquid media and in particular, liquid media for use in printing inks (e.g., printing pastes).

International patent application WO 99/21937 A1 describes an interpenetrating polymer network or semi-interpenetrating polymer network comprising: a) a first phase being continuous and comprising a flexible polymer, and b) a second phase being fluorescently durable dispersed and comprising a fluorescent dye, such as an thioxanthene-based dye or a perylene imide, and a polymer, wherein said polymer enhances durability of the fluorescent dye. The fluorescent dye is either covalently attached to or soluble in the polymer of the second phase. The interpenetrating and semi-interpenetrating polymer networks are useful in fluorescent traffic signs or safety devices or in pavement marking tape or paint.

French patent application FR 2850651 A1 describes a perylene dye substituted by a sterically stabilizing substituent and/or an electrostatically stabilizing substituent useful as dispersing agent. Examples of sterically stabilizing substituents include alkylene oxide based polymers, polyester based polymers, polyacrylate based polymers, alkyl sulfide based polymers, and alkyl compounds based polymers. The electrostatically stabilizing substituent contains ammonium groups and/or protonable amino groups.

### SUMMARY OF THE INVENTION

The present invention provides a vat dye that is covalently bonded through an oxygen atom to a polymeric moiety (i.e., a moiety which comprises at least three repeating units) that is derived from a phenolic resin, wherein the polymeric moiety covalently bonded through an oxygen atom to the vat dye is a group of formula P-O-, wherein P-O- is a residue of a compound of formula: 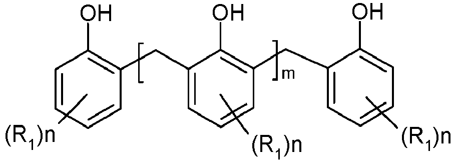
wherein the groups R₁, the same or different from each other, are selected from C₁-C₁₀ alkyl and C₁-C₄ alkoxy;
m represents an integer of from 1 to about 30;
n represents an integer of from 1 to about 3; and
wherein the vat dye is selected from compounds of general formulae (A) to (G): 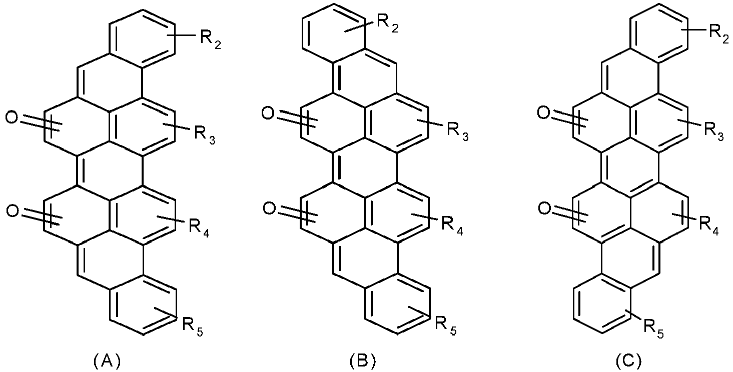 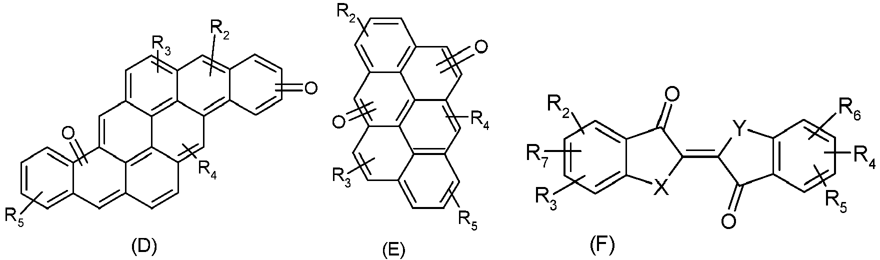 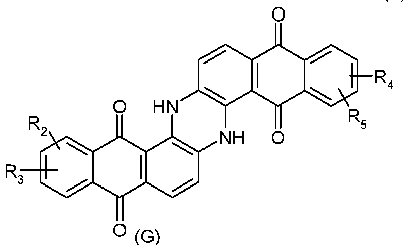
wherein R₂, R₃, R₄, R₅, R₆, and R₇ independently represent hydrogen, halogen, C₁-C₆ alkyl, C₁-C₄ alkoxy, nitro, cyano, -SO₃H, -COOH, or an amino group; and
X and Y are independently selected from NR' and S, wherein R' represents hydrogen, C₁-C₆ alkyl or C₆-C₁₀ aryl.

The polymeric moiety increases the solubility and/or dispersibility of the vat dye in a polar liquid medium. For example, the solubility or dispersibility of the bonded vat dye in the polar liquid medium may be at least about 3 times the solubility or dispersibility of the vat dye that is not bonded to the polymeric moiety in the same polar liquid medium and under the same temperature and pressure conditions. Non-limiting examples of polar liquid media include alcohols, polyols, ketones, amides, esters, sulfoxides and mixtures thereof.

In one aspect of the above polymeric compound, m may represent an integer of from 1 to 10 and/or n may be 1 or 2 and/or the groups R₁ may independently be selected from C₁-C₁₀ alkyl such as, e.g., isopropyl, tert-butyl, tert-octyl, n-nonyl, and branched nonyl.

If any of R₂, R₃, R₄, R₅, R₆, and R₇ represents an amino group, the amino group may, for example, be an N-heterocycloalkyl group which is bonded to the basic skeleton of the vat dye through an N atom. The N-heterocycloalkyl group may comprise from 3 to about 8 ring members and/or may comprise from 1 to 3 ring atoms selected from N, O and S, provided at least one ring atom is N. In particular, the N-heterocycloalkyl group may be derived from a compound selected from optionally substituted azacyclooctane, optionally substituted azepane, optionally substituted piperidine, optionally substituted piperazine, optionally substituted pyrrolidine, optionally substituted azetidine, optionally substituted aziridine, optionally substituted morpholine, optionally substituted oxazolidine, optionally substituted pyrazolidine, optionally substituted isopyrazolidine, optionally substituted isoxazolidine, and optionally substituted thiazolidine, one or more substituents each independently being selected from C₁-C₄ alkoxy and C₁-C₆ alkyl groups.

In yet another aspect of the polymer-bonded vat dye of the present invention, the vat dye may have a basic molecular skeleton (i.e., without substituents) of one of the following formulae (1) to (6), (10) and (11): 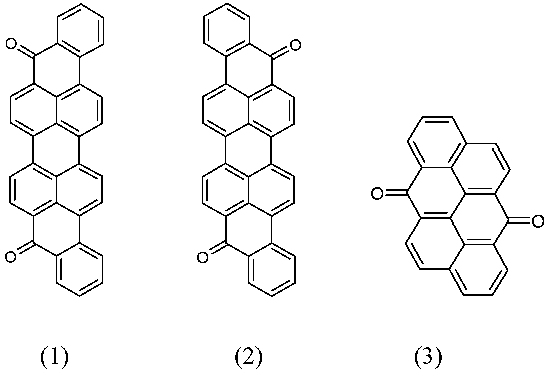 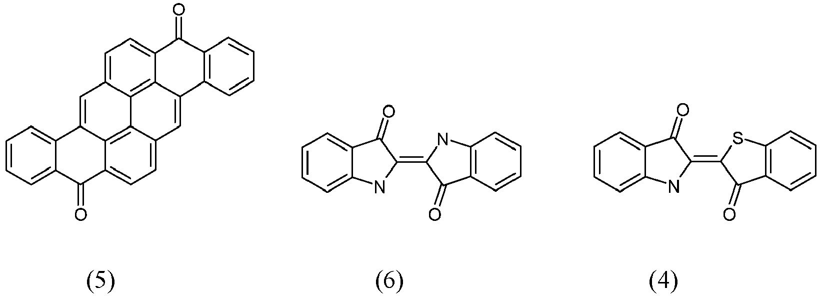 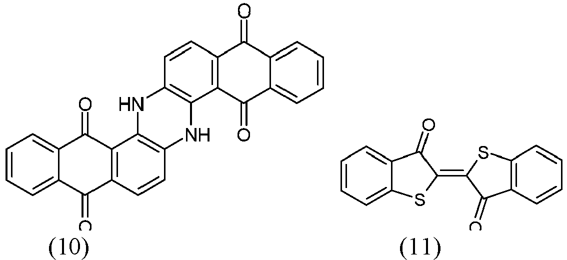 The (optional) substituents of the compounds of formulae (1) to (6), (10) and (11) include those which are set forth above as meanings of R₂, R₃, R₄, R₅, R₆, and R₇ in the compounds of general formulae (A) to (G).

The present invention also provides a process for making the polymer-bonded vat dye of the present invention as set forth above. The process comprises reacting, in a polar aprotic solvent and in the presence of at least one of an inorganic base and a strong organic non-nucleophilic base, a vat dye that comprises at least one leaving group such as, e.g., halogen, mesylate, tosylate with a polymeric compound of the formula (K) 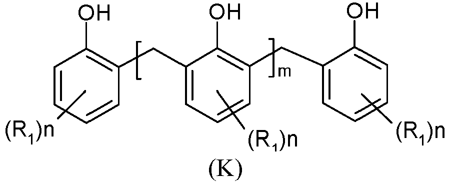 wherein the groups R₁, the same or different from each other, are selected from C₁-C₁₀ alkyl and C₁-C₄ alkoxy; m represents an integer of from 1 to about 30; and n represents an integer of from 1 to about 3 that comprises a phenolic hydroxy group which is nucleophilically substituting the at least one leaving group in the presence of the base.

In another aspect of the process of the present invention, the polar aprotic solvent may comprise at least one of N-methylpyrrolidone, dimethyl formamide, dimethyl acetamide, and dimethylsulfoxide.

The present invention also provides a composition for printing or for dying textiles and fibers. The composition comprises a polar liquid medium and at least one polymer-bonded vat dye of the present invention as set forth above (including the various aspects thereof) dissolved or dispersed in the medium.

In one aspect, the composition may comprise from about 0.01 % to about 40 %, e.g., from about 0.05 % to about 10 %, or from about 0.1 % to about 5 % by weight of the at least one polymer-bonded vat dye, based on the total weight of the composition.

The present invention also provides a marking or security feature which is made with the printing ink composition of the present invention.

In one aspect, the marking or security feature may comprise at least one of a thread, a fiber, a label, a barcode, a 2D code, a pattern, indicia, a data matrix, a digital stamp, and a cloud of dots (visible or invisible) which supports data information..

The present invention also provides an article which comprises the marking or security feature of the present invention as set forth above. In one aspect, the article may be at least one of a label such as, e.g., a tax label, packaging, a can, a metal, an aluminum foil, a cartridge, a closed cartridge (e.g., a capsule) that contains, e.g., a pharmaceutical, a nutraceutical, a foodstuff or a beverage (such as, e.g., coffee, tea, milk, chocolate, etc.), an article made of glass, an article made of ceramic, a banknote, a stamp, a security document, an identity card, a passport, a driver's license, a credit card, an access card, a ticket such as, e.g., a transportation ticket or an event ticket, a voucher, a value document, an ink-transfer film, a reflective film, a thread, a fiber, a commercial good, and a cigarette packaging carrying or not carrying coded or encrypted information..

The present invention also provides a method of authenticating an article. The method comprises providing the article with the marking or security feature of the present invention as set forth above and/or comprises applying onto the article a printing ink composition of the present invention as set forth above. For example, the article may be at least one of a label such as, e.g., a tax label, packaging, a can, a metal, an aluminum foil, a cartridge, a closed cartridge (e.g., a capsule) that contains, e.g., a pharmaceutical, a nutraceutical, a foodstuff or a beverage (such as, e.g., coffee, tea, milk, chocolate, etc.), an article made of glass, an article made of ceramic, a banknote, a stamp, a security document, an identity card, a passport, a driver's license, a credit card, an access card, a ticket such as, e.g., a transportation ticket or an event ticket, a voucher, a value document, an ink-transfer film, a reflective film, a thread, a fiber, a commercial good, and a cigarette packaging carrying or not carrying coded or encrypted information..

The present invention also provides a fabric or fiber which is dyed with the dying composition of the present invention as set forth above. The fabric or fiber may, for example, comprise natural fibers and/or may comprise synthetic fibers. For example, the fabric or fiber may comprise one or more of wool, cotton, silk, linen, hemp, jute, a polyester, a polyamide, an aramid, a polyacrylonitrile, an acrylic, and a polyolefin. Accordingly, the present invention makes it possible, for example, to directly print a dyed fiber as a marking, i.e., without having to first reduce the vat dye, contacting the reduced vat dye with the fiber and thereafter reoxidizing the vat dye.

The present invention also provides a method of dying a fabric or fiber. The method comprises contacting the fabric or fiber with the composition for dying of the present invention as set forth above.

The present invention also provides a polymer of formula (K) in which at least about 0.1 % of the polymer molecules have bonded thereto 1 to 4 residues (e.g., 1, 2, or 3 residues) of one or more vat dyes as described herein that are bonded to the polymer molecule through O atoms 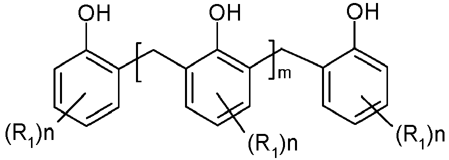 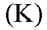 wherein in formula (K) the groups R₁, m and n have the meanings set forth above (including the various aspects thereof). In another aspect, the polymer may be obtainable by the process of the present invention as set forth above.

### DETAILED DESCRIPTION OF THE PRESENT INVENTION

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description making apparent to those skilled in the art how the several forms of the present invention may be embodied in practice.

As set forth above, the present invention provides a vat dye that is covalently bonded through an oxygen atom to a polymeric moiety that is derived from a phenolic resin, wherein the polymeric moiety covalently bonded through an oxygen atom to the vat dye is a group of formula P-O-, wherein P-O- is a residue of a compound of formula: 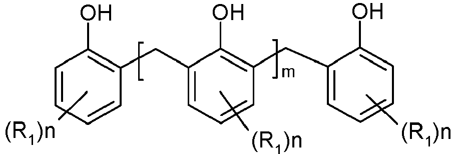
wherein the groups R₁, the same or different from each other, are selected from C₁-C₁₀ alkyl and C₁-C₄ alkoxy; m represents an integer of from 1 to about 30 e.g., from 1 to 25, from 1 to 15, from 1 to 10, from 1 to 5, from 1 to 3, from 5 to 15, from 5 to 10, from 10 to 20, or from 20 to 30; n represents an integer of from 1 to about 3 (e.g., 1, 2 or 3); and
wherein the vat dye is selected from compounds of general formulae (A) to (G): 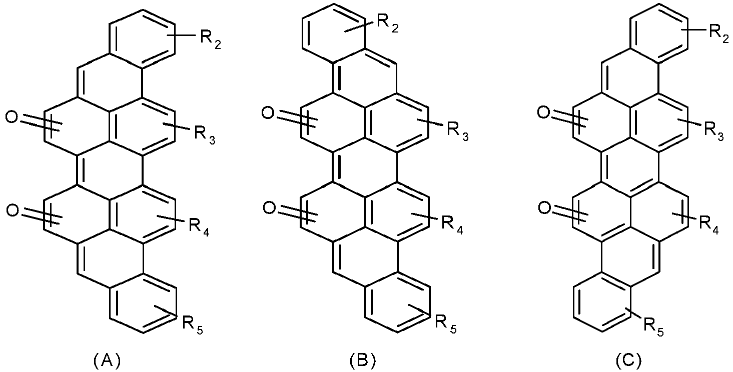 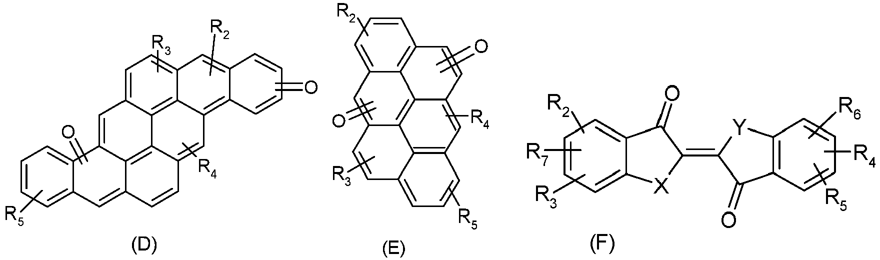 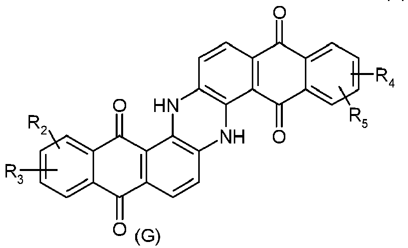
wherein R₂, R₃, R₄, R₅, R₆, and R₇ independently represent hydrogen, halogen, C₁-C₆ alkyl, C₁-C₄ alkoxy, nitro, cyano, -SO₃H, -COOH, or an amino group; and
X and Y are independently selected from NR' and S, wherein R' represents hydrogen, C₁-C₆ alkyl or C₆-C₁₀ aryl. The polymeric moiety will usually (considerably) increase the solubility and/or dispersibility of the vat dye in polar liquid media. For example, the solubility and/or dispersibility of the bonded vat dye in a polar liquid medium such as, e.g., at least one an alcohol such as methanol or ethanol, a polyol such as ethylene glycol and propylene glycol, a ketone such as acetone and methylethylketone, an ester such as ethyl acetate, an amide such as N-methylpyrrolidone, dimethylformamide and dimethylacetamide, a sulfoxide such as dimethylsulfoxide and any mixtures thereof may be at least about 3 times, e.g., at least about 5 times, at least about 10 times, or at least about 50 times the solubility and/or dispersibility in the at least one polar liquid medium of the vat dye that is not bonded to the polymeric moiety. In each case the corresponding calculations are based on the vat dye alone, i.e., without taking into account the polymeric moiety bonded thereto.
In the polymeric moiety described herein, for example, m may represent an integer of from 1 to 10 (i.e., 1, 2, 3, 4, 5, 6, 7, 8, 9 or 10) and/or n may be 1 or 2 and/or the groups R₁ may independently be selected from C₁-C₁₀ alkyl such as, e.g., isopropyl, tert-butyl, tert-octyl, n-nonyl and branched nonyl. Further, a group R₁ may be in the meta- or para-position with respect to the OH group, For example, if two groups R₁ are present on a phenyl ring (the same or different, preferably the same groups R₁) they may be present in any of the available positions on the phenyl ring, such as, e.g., meta/para or meta/meta with respect to the OH group.

One of skill in the art will appreciate that compounds of the above general formula will often be present as a mixture of compounds with different values of m. In this case, the average value of m in the general formula will often be at least about 1, e.g., at least about 2, e.g., at least about 3, at least about 4, or at least about 5 and will also often be not higher than about 20, e.g., not higher than about 15, or not higher than about 10.

In the general formulae (A) to (G), the groups R₂, R₃, R₄, R₅, R₆, and R₇ may independently represent hydrogen, halogen (e.g., F, Cl, Br and I and in particular, Cl or Br), C₁-C₆ alkyl (e.g., methyl, ethyl, n-propyl, i-propyl, n-butyl, i-butyl, sec.-butyl, and tert.-butyl), C₁-C₄ alkoxy (e.g., methoxy, ethoxy, propoxy and butoxy), nitro, cyano, -SO₃H, -COOH, or an amino group such as, e.g., an amino group of formula N(R")₂ wherein the radicals R" are independently selected from H, C₁-C₆ alkyl (such as, e.g., methyl and ethyl) and C₆-C₁₀ aryl (e.g., phenyl). Further, X and Y may independently be selected from NR' and S, wherein R' represents hydrogen, C₁-C₆ alkyl or C₆-C₁₀ aryl (e.g., optionally substituted phenyl or optionally substituted benzyl). It is to be appreciated that in the above formulae (A) to (G) the position of a keto group is not fixed, i.e., a keto group can be present in any position of any phenyl ring that preserves the conjugated system. In other words: 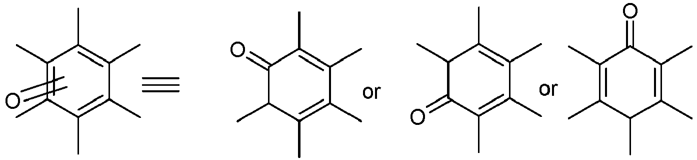 It further is to be appreciated that the positions of the keto groups in the above formulae (A) to (G) are merely exemplary. In other words, the keto groups in formulae (A) to (G) may optionally be present on rings which are different from those which are shown to comprise a keto group. For further illustration of formulae (A) to (G) the above formulae (1) to (6), (10) and (11) which show specific examples of basic skeletons of vat dyes to be bonded to a polymeric moiety in accordance with the present invention and exemplify possible positions of the keto groups may be referred to.

It also is to be appreciated that in the above formulae (A) to (G) each of the rings may independently carry one or more than one substituent (e.g., 2 or 3 three substituents). In other words, even if in these formulae a ring is shown to not carry a substituent or to carry only one substituent each of these rings may carry, 1, 2, 3 or more substituents (if possible). Neither is the number of substituents limited to the specific number of groups R shown in each of formulae (A) to (G). Further, each of the rings of the basic aromatic skeletons of the above formulae (1) to (6), (10) and (11) may independently carry one or more than one substituent (e.g., 2 or 3 three substituents).

Further, if any of R₂, R₃, R₄, R₅, R₆, and R₇ in the above formulae (A) to (G) represents an amino group, the amino group may, for example, also be an N-heterocycloalkyl group which is bonded to the basic skeleton of the vat dye through an N atom. The N-heterocycloalkyl group may, for example, comprise from 3 to about 8 ring members (e.g., 3, 4, 5, 6, 7 or 8 ring members) and/or may, for example, comprise from 1 to 3 ring atoms (i.e., 1, 2 or 3 ring atoms) which may be selected from N, O and S, provided that at least one ring atom is N (and at least one ring atom is C). For example, the N-heterocycloalkyl group may be derived from a compound selected from optionally substituted azacyclooctane, optionally substituted azepane, optionally substituted piperidine, optionally substituted piperazine, optionally substituted pyrrolidine, optionally substituted azetidine, optionally substituted aziridine, optionally substituted morpholine, optionally substituted oxazolidine, optionally substituted pyrazolidine, optionally substituted isopyrazolidine, optionally substituted isoxazolidine, and optionally substituted thiazolidine. The optional substituents (1, 2, 3 or more substituents) may, for example, independently be selected from C₁-C₄ alkoxy (e.g., methoxy, ethoxy, propoxy and butoxy) and C₁-C₆ alkyl groups (e.g., methyl, ethyl, n-propyl, i-propyl, n-butyl, i-butyl, sec.-butyl, and tert.-butyl). A specific, non-limiting example of a corresponding substituted heterocycloalkyl group is 3,5-dimethyl-1-piperidinyl.

The structures of formulae (1) to (6), (10) and (11) above represent specific and non-limiting examples of the basic skeletons (i.e., without any substituents) of the polymer-bonded vat dyes of the present invention. It is noted that the substituents present in the formulae (A) to (G) could also be present in the formulae (1) to (6), (10) and (11).

Specific and non-limiting examples of vat dyes which may have one or more polymeric moieties bonded thereto to form a polymer-bonded vat dye of the present invention include the following:
Vat Green 3 (C.I. 69500; naphtha[2,1,9-mna]naphtha[2,3-h]acridine-5,10,15(16H)-trione): 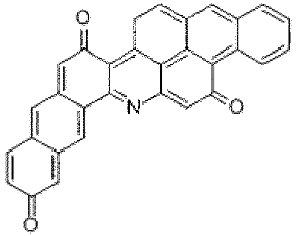 (C.I. 60010; dichlorobenzo[rst]phenanthro[10,1,2-cde]pentaphene-9,18-dione): 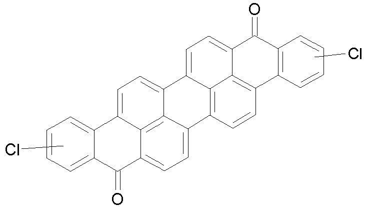
Vat Violet 3 (5,5'-dichloro-4,4',7,7'-tetramethyl-[2,2'-dibenzo[b]thiophene]-3,3'-dione): 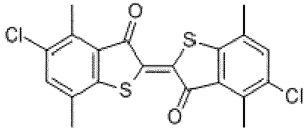 (dibromodibenzo [bd,ef]chrysene-7, 14-dione): 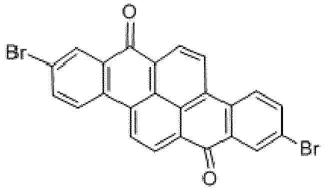
Vat Orange 2 (dibromo-8,16-pyranthrenedione): 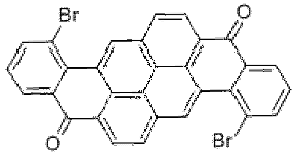
Vat Orange 3 (C.I. 59300; C.I. Pigment Red 168; 4,10-dibromo-dibenzo[def,mno]chrysene-6,12-dione): 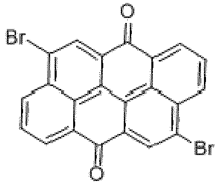
Vat Blue 4 (6,15-dihydro-5,9,14,18-anthrazinetetrone; C.I. 69800; C.I. Pigment Blue 60): 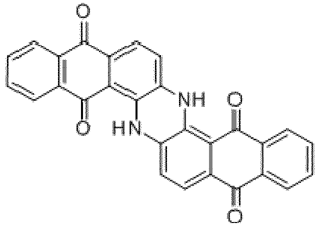
Vat Blue 4B (C.I. 73065; 5,7-dibromo-2-(5,7-dibromo-1,3-dihydro-3-oxo-2H-indol-2-ylidene)-1,2-dihydro-3H-indol-3-one): 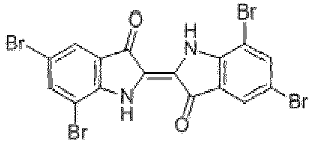
Vat Blue 6 (3,3'-dichloroindanthrene; 3,3'-dichloroindanthrone; 7,16-dichloro-6,15-dihydro-5,9,14,18-anthrazinetetrone; 7,16-dichloroindanthrone; 7:16-dichloro-6:15-indanthrone):

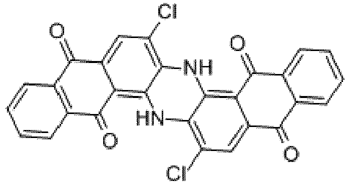

As is readily apparent to those of skill in the art, the polymer-bonded vat dyes of the present invention can be made by various processes. One of these processes involves substituting a vat dye with a leaving group such as a halogen atom (e.g., Cl, Br), mesylate, tosylate or using a vat dye which already contains at least one leaving group and replacing the leaving group on the thus substituted vat dye by the desired polymeric moiety. The latter process may comprise, for example, the reaction in a polar aprotic solvent and in the presence of an inorganic base and/or a strong organic non-nucleophilic base, of the leaving group-substituted vat dye with a polymeric compound of the formula (K) 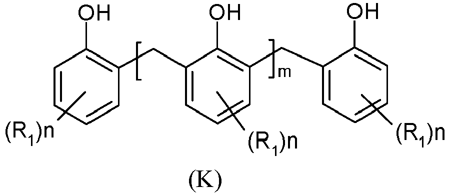 wherein R₁, m and n have the meanings set forth above. The polymeric compound of the formula (K) comprises a phenolic hydroxy group which is nucleophilically substituting the leaving group in the presence of the base. In this regard, it is to be appreciated that the leaving group that is to be replaced by the polymeric entity may be bonded directly to one of the rings of the basic aromatic skeleton of the vat dye or may be bonded to a substituent thereof, e.g., an alkyl or aryl substituent of the vat dye.

A typical and non-limiting (substitution) reaction between a vat dye and a polymeric compound of the above formula (K) in accordance with the present invention can be represented as follows: 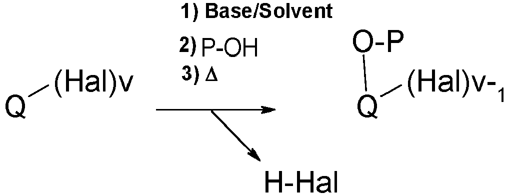
wherein Q represents the basic skeleton of a vat dye;
P-OH represents a polymeric compound of the above formula (K);
Hal represents halogen such as, e.g., Cl or Br (or any other leaving group);
v is an integer of at least 1 (and preferably not higher than 6, e.g., not higher than 4, or not higher than 2); further, if v is 2 or higher, the groups Hal may be the same or different;
and the symbol "Δ" represents the application of heat (i.e., heating).

Examples of inorganic and organic bases suitable for catalyzing nucleophilic substitution reactions are well known to those of skill in the art. An example of a suitable inorganic base is K₂CO₃. Reaction temperatures will often range from about 50° C to about 140° C, also depending on the boiling point of the solvent used. The reaction product (polymer-bonded vat dye) can usually be isolated from the resultant reaction mixture and optionally purified by conventional means such as, e.g., filtration, centrifugation, extraction, chromatographic methods, etc.

The weight ratio of vat dye(s) of formula Q-(Hal)ᵥ (or similar compounds) to polymeric compound(s) of formula P-OH (or similar polymeric compounds) depends on several factors such as, e.g., the molecular weight(s) of vat dye(s) of formula Q-(Hal)ᵥ, the average number of vat dye molecules of formula Q-(Hal)ᵥ that is/are to be bonded to a single polymer molecule or the average number of polymer molecules that are to be bonded to a single vat dye of formula Q-(Hal)ᵥ (or a similar vat dye). In particular, in a polymer-bonded vat dye of the present invention a single polymer molecule P may have one or more than one unit Q (e.g., an average of 1, 2, 3, 4 of units Q) bonded thereto. Conversely, one or more than one polymer molecule (e.g., an average of 1, 2, 3, 4, or more polymer molecules) may be bonded to a single unit Q.

It further is possible (and sometimes preferred) to employ a relatively large stoichiometric excess of polymer(s) with respect to vat dye(s) of formula Q-(Hal)ᵥ (or similar compounds). This will result in a polymer wherein only a small fraction (e.g., not more than about 0.1%, not more than about 0.5 %, not more than about 1 %, or not more than about 2 %, not more than about 4%, not more than about 6%, not more than about 8%, not more than about 10%) of the polymer molecules have at least one vat dye unit Q bonded thereto, thereby affording a polymer of the present invention. The polymer can be used for the same purposes for which the polymer-bonded vat dye of the present invention is employable such as, e.g., as a component of a printing ink or dying composition.

It is, of course, possible to react one vat dye of formula Q-(Hal)ᵥ (or a similar vat dye) with more than one (or more than one type of) polymer. By way of non-limiting example, a vat dye of formula Q-(Hal)ᵥ (or a similar compound) may be reacted with a mixture of polymers of the above formula (K). Conversely, two or more different compounds of formula Q-(Hal)ᵥ may be reacted with (bonded to) a single (type of) polymer. Finally, two or more different vat dyes of formula Q-(Hal)ᵥ (or similar compounds) may be reacted with two or more different (types of) polymers, although this will usually result in difficult to control reaction mixtures.

For example, by reacting Vat Violet 3 of formula: 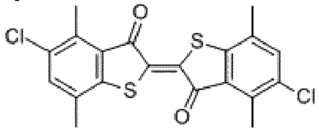 with a compound P-OH of formula 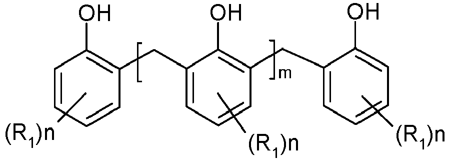 wherein R₁ is tert-butyl; n = 2 and m = 7, one will obtain a compound of formula:

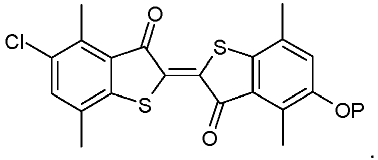

By further example, by reacting Vat Orange 1 of formula: 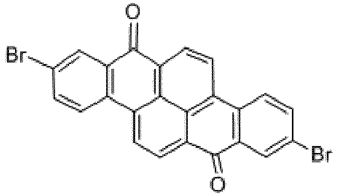 with the above compound P-OH one will obtain a compound of formula:

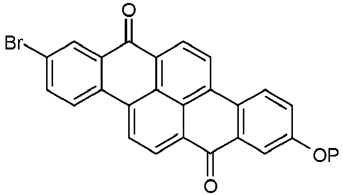

Of course, depending on the reaction conditions it also is possible to replace the second (remaining) halogen in the above formulae of Vat Violet 3 and Vat Orange 1 by a moiety PO. Conversely (and additionally), it is possible for the polymeric moiety P to have more than one (e.g., 2) vat dye molecules bonded to it through one or more of the additional OH groups thereof.

Further exemplary processes for making a polymer-bonded vat dye according to the present invention can be represented by the following reaction schemes (which show a two-step process wherein one of the halogen atoms (or other leaving groups) of the basic vat dye is replaced by a polymeric moiety that is bonded to the aromatic skeleton through an O atom and another halogen atom of the vat dye is replaced by a cycloaliphatic amino group:
(1) 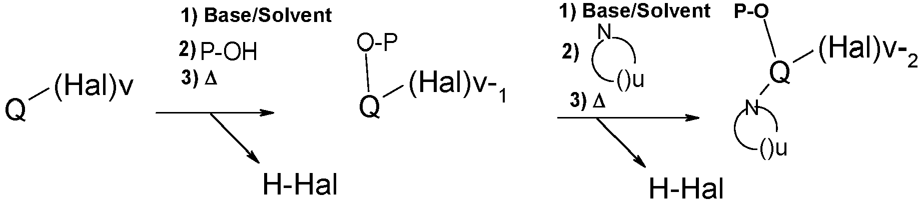
(2) 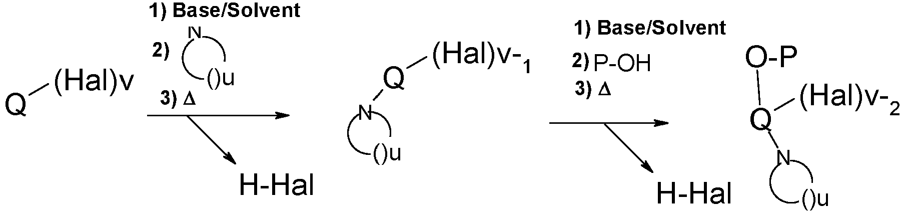
   wherein Q represents the basic skeleton of the vat dye;
   P-OH represents a polymeric compound of the above formula (K);
   Hal represents halogen such as, e.g., Cl or Br (or any other leaving group);
   () represents CH₂ wherein at least one CH₂ group can be replaced by O, NH or S;
   u is from 2 to 7;
   v is an integer of at least two (and preferably not higher than 6, e.g., not higher than 4).

If one of the above processes (1) or (2) is to be selected, it will usually be preferred to employ the process that will afford the intermediate (after the first step) that exhibits the higher solubility.

For example, by reacting a vat dye of the following formula by the process according to the invention described above (see reaction scheme (2)): 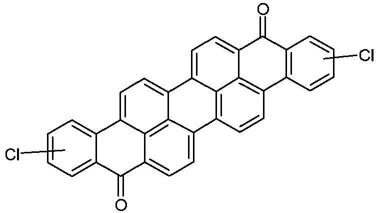 with piperidine one will obtain a compound of formula: 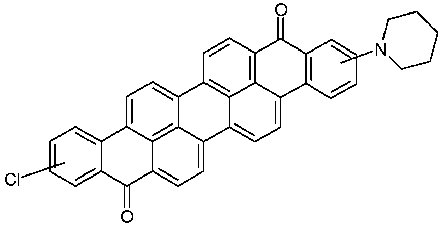 which compound can in turn be reacted with P-OH, wherein P-OH represents a polymeric compound of the above formula (K) to afford a compound of formula:

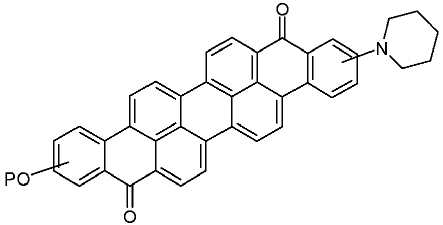

If the above reaction sequence (1) is carried out with a vat dye of the following formula by the process according to the invention described above: 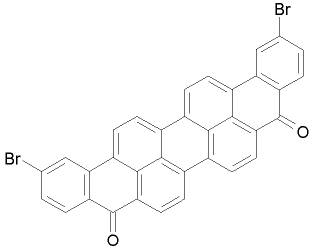 one will obtain a compound of formula: 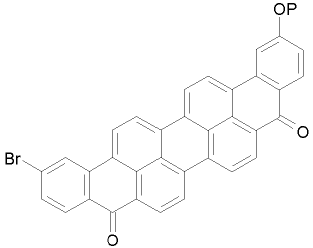 and thereafter (optionally) a compound of formula:

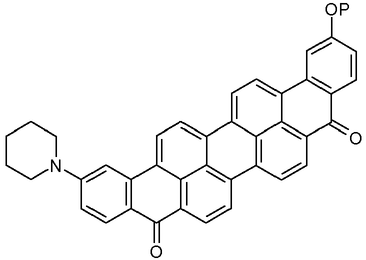

In this regard, it is to be appreciated that it is possible to employ as starting materials and intermediates in the reactions represented by the above reaction schemes not only individual compounds but also mixtures of compounds with different values of v (and even different values of u). For example, a starting material of formula Q-(Hal)ᵥ may be a mixture of two compounds (not taking into account positional isomers) wherein v represents 5 or 6. Likewise, even if a single compound of formula Q-(Hal)ᵥ is employed as starting material, depending on the reaction conditions the intermediate obtained after the first reaction may be a single compound or a mixture of compounds such as, e.g., a mixture of three compounds (not taking into account positional isomers) wherein, for example, 1, 2 or 3 halogen atoms are replaced by a group P-O- or an N- heterocycloaliphatic ring.

A printing ink composition in accordance with the present invention comprises a polar liquid medium and one or more (types of) polymer-bonded vat dyes as set forth above (e.g., a mixture of two or three different polymer-bonded vat dyes) dissolved or dispersed in the medium. The concentration of the polymer-bonded vat dye(s) in the medium depends on several factors such as, e.g., the polymer(s) to which the vat dye(s) is/are bonded, the desired color intensity, the liquid medium, the remaining (optional) components of the composition, the intended purpose of the printing ink composition, and the substrate onto which the printing ink composition is to be applied. Often the (total) concentration of the one or more polymer-bonded vat dye(s) in the printing ink composition will be at least about 0.01 %, at least about 0.02 %, or at least 0.05 % by weight, and will usually be not higher than about 40 % by weight, e.g. not higher than about 20 %, not higher than about 10 %, or not higher than about 5 % by weight based on the total weight of the composition.

The intended purpose of the printing ink composition is one of several factors which determines suitable and desirable concentration ranges for the polymer-bonded vat dyes as well as the types and concentration ranges of suitable or desirable optional components of the composition. There are many different types of printing processes. Non-limiting examples thereof include inkjet printing (thermal, piezoelectric, continuous, etc.), flexography, intaglio printing (e.g., gravure printing), screen printing, letterpress printing, offset printing, pad printing, relief printing, planographic printing and rotogravure printing. In a preferred embodiment, a printing ink composition in accordance with the present invention is suitable (at least) for inkjet printing. Industrial inkjet printers, commonly used for numbering, coding and marking applications on conditioning lines and printing presses, are particularly suitable. Preferred ink-jet printers include single nozzle continuous ink-jet printers (also called raster or multi level deflected printers) and drop-on-demand ink-jet printers, in particular valve-jet printers. Accordingly, the following discussion of printing ink compositions relates primarily to compositions for inkjet printing. However, it is to be kept in mind that the present invention is not limited to printing ink compositions for inkjet printing but rather encompasses all printing ink compositions in which vat dyes can be employed. Accordingly, the following considerations and statements apply *mutatis mutandis* to all printing ink compositions in which the polymer-bonded vat dyes in accordance with the teaching of the present invention are useful.

Printing inks in general comprise coloring agents and liquid vehicles which comprise solutions of resinous binders in solvents. The specific choice of binders and solvents depends on several factors, such as, for example, the polymer-bonded vat dye(s), the remaining components that are to be present, and the nature of the substrate to be printed. Non-limiting examples of suitable binders for use in the ink compositions for inkjet printing include binders which are conventionally used in inkjet printing inks, including resins such as nitrocellulose, acrylate resins and polyester resins (such as, e.g., DYNAPOL^{®} L 1203 , L 205, L 206, L 208, L 210, L 411, L 651, L658, L 850, L 912, L 952, LH 530, LH 538, LH 727, LH 744, LH 773, LH 775, LH 818, LH 820, LH 822, LH 912, LH 952, LH 530, LH 538, LH 727, LH 744, LH 773, LH 775, LH 818, LH 820, LH 822, LH 823, LH 826, LH 828, LH 830, LH 831, LH 832, LH 833, LH 838, LH898, LH 908, LS436, LS615, P1500, S1218, S1227, S1247, S1249, S1252, S1272, S1401, S1402, S1426, S1450, S1510, S1606, S1611, S243, S320, S341, S361, S394, and S EP1408 from Evonik). Of course, other suitable resins known to those of skill in the art may be used as well. A typical (total) concentration of the one or more binders in the printing ink composition is from about 0.5 % to about 10 % by weight, based on the total weight of the composition. In this regard, it further is to be taken into account that typical viscosity values for inkjet printing inks are in the range of from about 4 to about 30 mPa.s at 25°C.

It further is to be appreciated that the polymer which has one or more vat dye moieties bonded thereto (and in the case of the doped polymer of the present invention as set forth above, also the polymer which is not bonded to any vat dye molecule but is present in admixture with polymer that has one or more vat dye moieties bonded thereto) may also act as a binder for the composition. At any rate, the (principal) binder of the ink composition must be compatible with the polymer which has a vat dye moiety bonded thereto, e.g., must no result in the formation of any insoluble substance, etc. when combined with the later.

Suitable solvents for inkjet printing inks are known to those of skill in the art. Non-limiting examples thereof include low-viscosity, slightly polar and aprotic organic solvents, such as, e.g., methyl ethyl ketone (MEK), acetone, ethyl acetate, ethyl 3-ethoxypropionate, toluene and mixtures of two or more thereof.

In particular if the printing ink composition of the present invention is to be applied by continuous inkjet printing the composition will usually also comprise at least one conductivity imparting agent (for example, a salt). The conductivity imparting agent will have a non-negligible solubility in the composition. Non-limiting examples of suitable conductivity imparting agents include salts such as, e.g., tetraalkyl ammonium salts (e.g., tetrabutyl ammonium nitrate, tetrabutyl ammonium perchlorate and tetrabutyl ammonium hexafluorophosphate), alkali metal thiocyanates such as potassium thiocyanate, akali potassium salts such as KPF₆ and alkali metal perchlorates such as lithium perchlorate. The conductivity imparting agent will be present in a concentration which is sufficient to provide the conductivity which is required or desirable. Of course, mixtures of two or more different conductivity imparting agents (salts) can be used. Often the one or more conductivity imparting agents will be present in a total concentration of from about 0.1 % to 2 % by weight, based on the total weight of the composition.

The printing ink composition according to the present invention may furthermore comprise one or more customary additives, such as, for example, fungicides, biocides, surfactants, sequestering agents, pH adjusters, etc. in the amounts customary for these additives. Further, the printing ink composition may comprise one or more additional colorants and/or components which impart a specific optical property (i.e., components which are different from the polymer-bonded vat dyes of the present invention). These additional components may be selected from, for example, conventional pigments and dyes, luminescent (e.g., fluorescent) pigments and dyes, and cholesteric and/or nematic liquid crystals. Examples of luminescent pigments include certain classes of inorganic compounds such as the sulphides, oxysulphides, phosphates, vanadates, garnets, spinels, etc. of non luminescent cations, which are doped with at least one luminescent transition-metal or a rare-earth metal cation. In order to strengthen the security of the ink composition may further comprise one or more pigments and/or dyes which absorb in the visible or invisible region of the electromagnetic spectrum and/or may further comprise one or more pigments and/or dyes which are luminescent. Non-limiting examples of suitable pigments and/or dyes which absorb in the visible or invisible region of the electromagnetic spectrum include phthalocyanine derivatives. Non-limiting examples of suitable luminescent pigments and/or dyes include lanthanide derivatives. The presence of pigment(s) and/or dye(s) will enhance and reinforce the security of the marking against counterfeiting.

The substrate or article which is to be provided with a marking and/or security feature in accordance with the present invention is not particularly limited and can be of various types. The substrate or article may, for example, consist (essentially) of or comprise one or more of a metal (for example, in the form of a container such as a can for holding various items such as, e.g., beverages or foodstuffs), optical fibers, a woven, a coating, and equivalents thereof, a plastic material, a ceramic material, glass (for example, in the form of a capsule or container such as a bottle for holding various items such as, e.g., beverages or foodstuffs), cardboard, packaging, paper, and a polymeric material. It is pointed out that these substrate materials are given exclusively for exemplifying purposes, without restricting the scope of the invention.

The substrate may furthermore already carry at least one marking or security element which comprises a substance selected from, e.g., inorganic luminescent compounds, organic luminescent compounds, IR-absorbers, magnetic materials, forensic markers, and combinations thereof. The marking or security element can be present in the form of indicia or a data matrix. on the substrate surface or be incorporated (embedded) in the substrate itself. The marking can be present also in the form of a cloud of dots or a specific pattern visible and/or invisible to the naked eye, randomly or not distributed in the item or article or goods or security documents or what is described above to be intended to be protected and/or authenticated.

### EXAMPLES

The following examples illustrate possible processes for making polymer-bonded vat dyes according to the present invention.

Under an inert gas atmosphere 1.2 g of K₂CO₃ was added to a solution of 10 g of phenol formaldehyde resin and 0.68 g of PEG 500 in 65 ml of NMP (N-methylpyrrolidone). The resultant mixture was heated for about 1 hour at 120 °C. Then 0.15 g of Vat Orange 3 was added to the mixture, whereafter heating at 120 °C was continued for about 2 to about 5 hours. Following the completion of the reaction about half of the volume of the NMP was distilled off. The reaction mixture was allowed to cool to room temperature and thereafter poured into 33 g of iced water to which 2 ml of conc. HC1 had been added. The resultant precipitate was filtered off and washed 3 times with water and then dried. This afforded about 10 g of crude powder comprising polymer-bonded Vat Orange 3.

Under an inert gas atmosphere 1.8 g of K₂CO₃ was added to a solution of 10 g of phenol formaldehyde resin and 0.68 g of PEG 500 in 65 ml of NMP. The resultant mixture was heated for about 1 hour at 120 °C. Then 0.2 g of Vat Orange 2 was added to the mixture, whereafter heating at 120 °C was continued for about 2 to about 5 hours. Following the completion of the reaction about half of the volume of the NMP was distilled off. The reaction mixture was allowed to cool to room temperature and thereafter poured into 33 g of iced water to which 2 ml of conc. HC1 had been added. The resultant precipitate was filtered off and washed 3 times with water and then dried. This afforded about 10 g of crude powder comprising polymer-bonded Vat Orange 2.

Under an inert gas atmosphere 1.6 g of K₂CO₃ was added to a solution of 10 g of phenol formaldehyde resin and 0.68 g of PEG 500 in 65 ml of NMP. The resultant mixture was heated for about 1 hour at 120 °C. Then 0.25 g of Vat Violet 9 was added to the mixture, whereafter heating at 120 °C was continued for about 2 to about 5 hours. Following the completion of the reaction about half of the volume of the NMP was distilled off. The reaction mixture was allowed to cool to room temperature and thereafter poured into 33 g of iced water to which 2 ml of conc. HC1 had been added. The resultant precipitate was filtered off and washed 3 times with water and then dried. This afforded about 10 g of crude powder comprising polymer-bonded Vat Violet 9.

Under an inert gas atmosphere 1.4 g of K₂CO₃ was added to a solution of 10 g of phenol formaldehyde resin and 0.68 g of PEG 500 in 65 ml of NMP. The resultant mixture was heated for about 1 hour at 120 °C. Then 0.2 g of Vat Violet 1 was added to the mixture, whereafter heating at 120 °C was continued for about 2 to about 5 hours. Following the completion of the reaction about half of the volume of the NMP was distilled off. The reaction mixture was allowed to cool to room temperature and thereafter poured into 33 g of iced water to which 2 ml of conc. HCl had been added. The resultant precipitate was filtered off and washed 3 times with water and then dried. This afforded about 10 g of crude powder comprising polymer-bonded Vat Violet 1.

Under an inert gas atmosphere 1.6 g of K₂CO₃ was added to a solution of 10 g of phenol formaldehyde resin and 0.68 g of PEG 500 in 65 ml of NMP. The resultant mixture was heated for about 1 hour at 120 °C. Then 0.3 g of Vat Blue 18 was added to the mixture, whereafter heating at 120 °C was continued for about 2 to about 5 hours. Following the completion of the reaction about half of the volume of the NMP was distilled off. The reaction mixture was allowed to cool to room temperature and thereafter poured into 33 g of iced water to which 2 ml of conc. HC1 had been added. The resultant precipitate was filtered off and washed 3 times with water and then dried. This afforded about 10 g of crude powder comprising polymer-bonded Vat Blue 18.

Under an inert gas atmosphere 1.6 g of K₂CO₃ was added to a solution of 10 g of phenol formaldehyde resin and 0.68 g of PEG 500 in 65 ml of NMP. The resultant mixture was heated for about 1 hour at 120 °C. Then 0.2 g of Vat Blue 6 was added to the mixture, whereafter heating at 120 °C was continued for about 2 to about 5 hours. Following the completion of the reaction about half of the volume of the NMP was distilled off. The reaction mixture was allowed to cool to room temperature and thereafter poured into 33 g of iced water to which 2 ml of conc. HC1 had been added. The resultant precipitate was filtered off and washed 3 times with water and then dried. This afforded about 10 g of crude powder comprising polymer-bonded Vat Blue 6.

Under an inert gas atmosphere 1.2 g of K₂CO₃ was added to a solution of 10 g of phenol formaldehyde resin and 0.68 g of PEG 500 in 65 ml of NMP. The resultant mixture was heated for about 1 hour at 120 °C. Then 0.15 g of Vat Violet 3 was added to the mixture, whereafter heating at 120 °C was continued for about 2 to about 5 hours. Following the completion of the reaction about half of the volume of the NMP was distilled off. The reaction mixture was allowed to cool to room temperature and thereafter poured into 33 g of iced water to which 2 ml of conc. HC1 had been added. The resultant precipitate was filtered off and washed 3 times with water and then dried. This afforded about 10 g of crude powder comprising polymer-bonded Vat Violet 3.

The ink according to the present invention contains at least one polymer-bonded vat dye according to the present invention. Examples of such inks which can be used may have the following formulations and are suitable to be used with inkjet printers.

### Ink Formulation 1

| Component | Function | % b.w. |
|---|---|---|
| Nitrocellulose | Binder resin | 1.5 |
| Lithium Perchlorate | Salt for conductivity | 0.5 |
| Polymer-bonded Vat Orange 3 | Dye | 1.0 |
| Acetone | Solvent | 97.0 |

### Ink Formulation 2

| Component | Function | % b.w. |
|---|---|---|
| Dynapol L411 (Polyester resin) | Binder resin | 1.5 |
| Potassium hexafluorophosphate | Salt for conductivity | 0.3 |
| Polymer-bonded Vat Violet 9 | Dye | 0.8 |
| Methyl ethyl ketone | Solvent | 97.4 |

### Ink Formulation 3

| Component | Function | % b.w. |
|---|---|---|
| Dynapol L411 (Polyester resin) | Binder resin | 1.5 |
| Potassium hexafluorophosphate | Salt for conductivity | 0.3 |
| Polymer-bonded Vat Violet 1 | Dye | 0.8 |
| Methyl ethyl ketone | Solvent | 97.4 |

### Ink Formulation 4

| Component | Function | % b.w. |
|---|---|---|
| Nitrocellulose | Binder resin | 1.5 |
| Potassium hexafluorophosphate | Salt for conductivity | 0.5 |
| Polymer-bonded Vat Blue 18 | Dye | 1.0 |
| Acetone | Solvent | 97.0 |

### Ink Formulation 5

| Component | Function | % b.w. |
|---|---|---|
| Dynapol L411 (Polyester resin) | Binder resin | 1.5 |
| Lithium Perchlorate | Salt for conductivity | 0.3 |
| Polymer-bonded Vat Blue 6 | Dye | 0.8 |
| Methyl ethyl ketone | Solvent | 97.4 |

### Ink Formulation 6

| Component | Function | % b.w. |
|---|---|---|
| Dynapol L411 (Polyester resin) | Binder resin | 1.5 |
| Lithium Perchlorate | Salt for conductivity | 0.3 |
| Polymer-bonded Vat Orange 2 | Dye | 2.2 |
| Black Microlith^{®} | Pigment | 1.0 |
| Methyl ethyl ketone | Solvent | 95 |

It is noted that the foregoing examples have been provided merely for the purpose of explanation and are in no way to be construed as limiting of the present invention. While the present invention has been described with reference to an exemplary embodiment, it is understood that the words which have been used herein are words of description and illustration, rather than words of limitation. Changes may be made, within the purview of the appended claims, as presently stated and as amended, without departing from the scope of the present invention in its aspects. Although the present invention has been described herein with reference to particular means, materials and embodiments, the present invention is not intended to be limited to the particulars disclosed herein; rather, the present invention extends to all functionally equivalent structures, methods and uses falling within the scope of the appended claims.

## Claims

1. A vat dye, wherein the vat dye is covalently bonded through an oxygen atom to a polymeric moiety that is derived from a phenolic resin, wherein the polymeric moiety covalently bonded through an oxygen atom to the vat dye is a group of formula P-O-, wherein P-O- is a residue of a compound of formula: 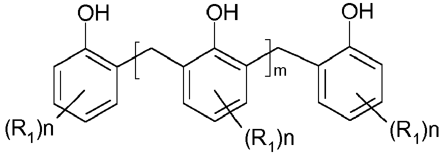
wherein the groups R₁, the same or different from each other, are selected from C₁-C₁₀ alkyl and C₁-C₄ alkoxy;
m represents an integer of from 1 to about 30;
n represents an integer of from 1 to about 3; and
wherein the vat dye is selected from compounds of general formulae (A) to (G): 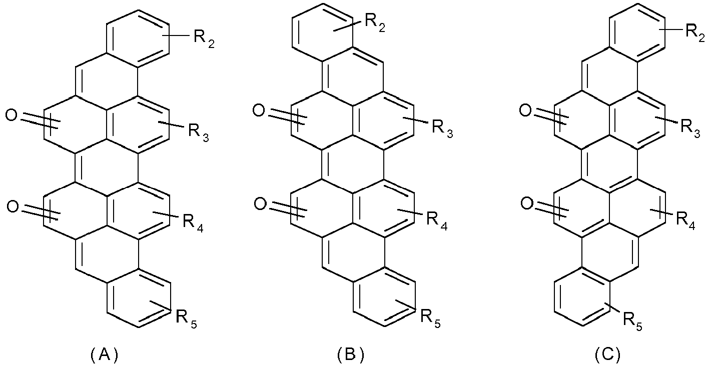 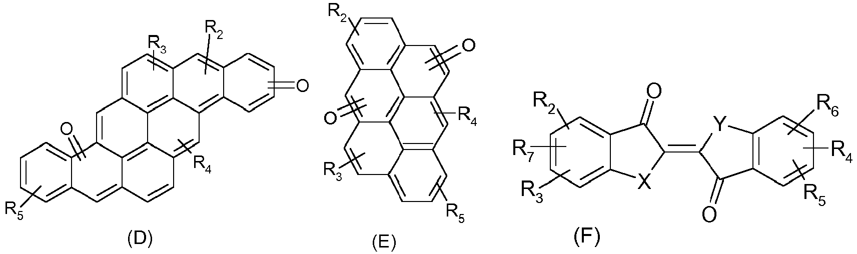 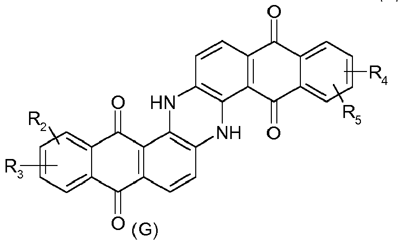
wherein R₂, R₃, R₄, R₅, R₆, and R₇ independently represent hydrogen, halogen, C₁-C₆ alkyl, C₁-C₄ alkoxy, nitro, cyano, -SO₃H, -COOH, or an amino group; and
X and Y are independently selected from NR' and S, wherein R' represents hydrogen, C₁-C₆ alkyl or C₆-C₁₀ aryl.

2. The vat dye of claim 1, wherein the groups R₁ are independently selected from C₁-C₁₀ alkyl.

3. The vat dye of claim 1 or 2, wherein the groups R₁ are independently selected from isopropyl, tert-butyl, *tert*-octyl, n-nonyl, and branched nonyl.

4. The vat dye of anyone of the claims 1 - 3, wherein the amino group is an N-heterocycloalkyl group which is bonded to a basic structure of the vat dye through an N atom.

5. The vat dye of claim 4, wherein the N-heterocycloalkyl group comprises from 3 to about 8 ring members.

6. The vat dye of claim 4 or 5, wherein the N-heterocycloalkyl group comprises from 1 to 3 ring atoms selected from N, 0 and S, provided at least one ring atom is N.

7. The vat dye of claim 6, wherein the N-heterocycloalkyl group is the residue of a compound selected from optionally substituted azacyclooctane, optionally substituted azepane, optionally substituted piperidine, optionally substituted piperazine, optionally substituted pyrrolidine, optionally substituted azetidine, optionally substituted aziridine, optionally substituted morpholine, optionally substituted oxazolidine, optionally substituted pyrazolidine, optionally substituted isopyrazolidine, optionally substituted isoxazolidine, and optionally substituted thiazolidine, with one or more substituents each being selected from C1-C4 alkoxy and C1-C6 alkyl groups.

8. The vat dye of any one of claims 1 to 7, wherein the vat dye has a basic structure of one of the following formulae (1) to (6), and (10) to (11):

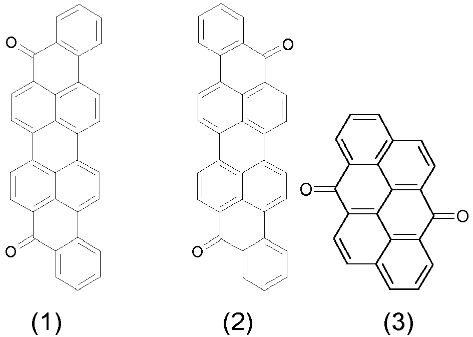

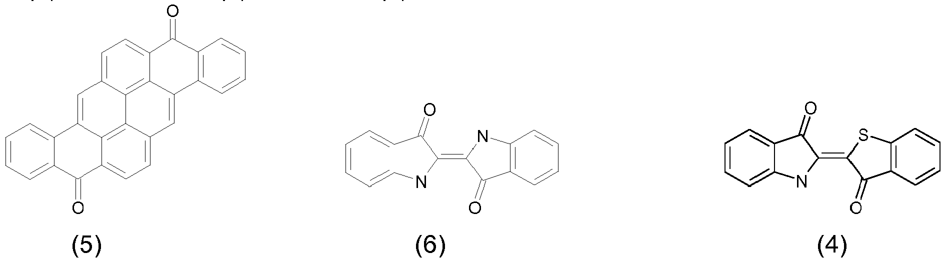

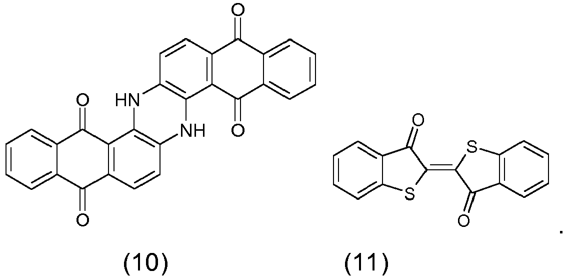

9. A process for making the vat dye of any one of claims 1 to 8, wherein the process comprises reacting, in a polar aprotic solvent and in the presence of at least one of an inorganic base and a strong organic non-nucleophilic base, a vat dye that comprises at least one leaving group with a polymeric compound of the formula (K): 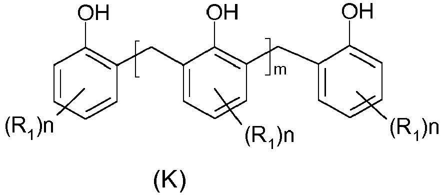
wherein the groups R₁, the same or different from each other, are selected from C₁-C₁₀ alkyl and C₁-C₄ alkoxy;
m represents an integer of from 1 to about 30;
n represents an integer of from 1 to about 3.

10. A composition for dying textiles or for printing, wherein the composition comprises a polar liquid medium and at least one polymer-bonded vat dye of any one of claims 1 to 8 dissolved or dispersed in the medium.

11. The composition of claim 10, wherein the composition comprises from about 0.01 % to about 40 % by weight of the at least one polymer-bonded vat dye, based on a total weight of the composition.

12. A marking or security feature which is made with the composition for printing of any one of claims 10 and 11.

13. The marking or security feature of claim 12, wherein the marking or security feature comprises at least one of a thread, a fiber, a label, a barcode, a 2D code, a pattern, indicia, a digital stamp, a cloud of dots, and data matrix.

14. An article which comprises the marking or security feature of any one of claims 12 and 13.

15. The article of claim 14, wherein the marking or security feature is present as a layer on the article.

16. The article of any one of claims 14 and 15, wherein the article is at least one of a can, a metal, an aluminum foil, a cartridge, a capsule, an article made of glass, an article made of ceramic, a packaging, a banknote, a passport, a security document, a value document, a ticket, a thread, a fiber, a label, a card, a commercial good, and a cigarette packaging which may or may not carry coded or encrypted information.

17. A method of authenticating an article, wherein the method comprises providing the article with the marking or security featu re of any one of claims 12 and 13 and/or applying onto the article a printing ink composition of any one of claims 10 and 11.

18. The method of claim 17, wherein the article is at least one of a can, a metal, an aluminum foil, a cartridge, a capsule, an article made of glass, an article made of ceramic, a packaging, a banknote, a passport, a security document, a value document, a ticket, a thread, a label, a card, a commercial good, and a cigarette packaging which may or may not carry coded or encrypted information.

19. A fabric or fiber which is dyed with the composition of any one of claims 10 and 11.

20. The fabric or fiber of claim 19, wherein the fabric or fiber comprises natural fibers and/or synthetic fibers.

21. The fabric or fiber of claim 20, wherein the fabric or fiber comprises: one or more of wool, cotton, silk, linen, hemp, and jute, and/or one or more of a polyester, a polyamide, an aramid, a polyacrylonitrile, an acrylic, and a polyolefin.

22. A polymer of formula (K), wherein at least about 0.1 % of polymer molecules have bonded thereto 1 to 4 residues of one or more vat dyes as recited by claim 1 that are bonded to the polymer molecule through O atoms 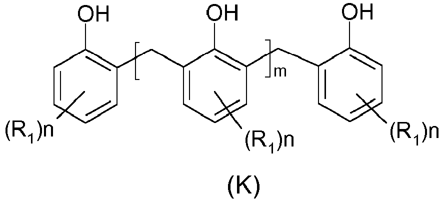
wherein in formula (K), the groups R₁, the same or different from each other, are selected from C₁-C₁₀ alkyl and C₁-C₄ alkoxy;
m represents an integer of from 1 to about 30;
n represents an integer of from 1 to about 3.

## Patentansprüche

1. Ein Küpenfarbstoff, wobei der Küpenfarbstoff über ein Sauerstoffatom kovalent mit einer polymeren Gruppierung verbunden ist, die von einem Phenolharz abgeleitet ist, wobei die polymere Gruppierung, die über ein Sauerstoffatom kovalent mit dem Küpenfarbstoff verbunden ist, eine Gruppe der Formel P-O- ist, wobei P-O- ein Rest einer Verbindung der folgenden Formel ist: 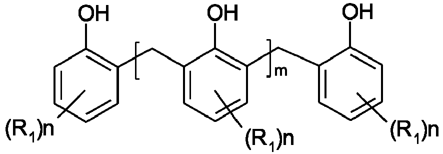
wobei die Gruppen R₁, die gleich oder voneinander verschieden sind, aus C₁-C₁₀-Alkyl und C₁-C₄-Alkoxy ausgewählt sind;
m eine ganze Zahl von 1 bis etwa 30 darstellt;
n eine ganze Zahl von 1 bis etwa 3 darstellt; und
wobei der Küpenfarbstoff aus Verbindungen der allgemeinen Formeln (A) bis (G) ausgewählt ist: 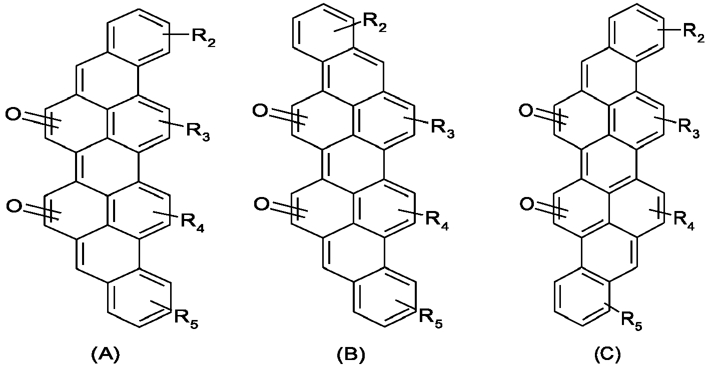 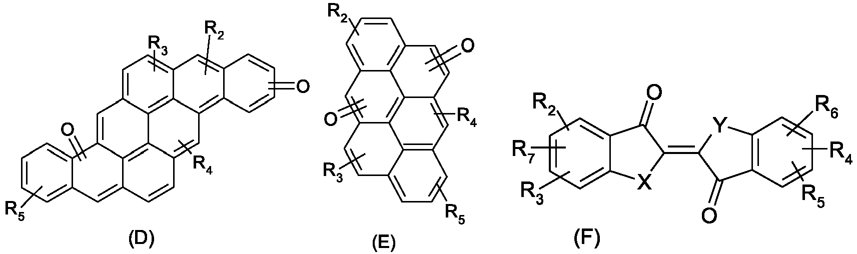 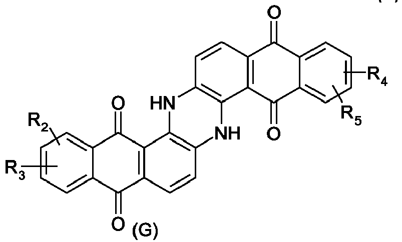
wobei R₂, R₃, R₄, R₅, R₆ und R₇ unabhängig voneinander Wasserstoff, Halogen, C₁-C₆-Alkyl, C₁-C₄-Alkoxy, Nitro, Cyano, -SO₃H, -COOH oder eine Aminogruppe darstellen; und
X und Y unabhängig voneinander aus NR' und S ausgewählt sind, wobei R' Wasserstoff, C₁-C₆-Alkyl oder C₆-C₁₀-Aryl darstellt.

2. Der Küpenfarbstoff nach Anspruch 1, wobei die Gruppen R₁ unabhängig voneinander aus C₁-C₁₀-Alkyl ausgewählt sind.

3. Der Küpenfarbstoff nach Anspruch 1 oder 2, wobei die Gruppen R₁ unabhängig voneinander aus Isopropyl, *tert*-Butyl, *Tert*-Octyl, n-Nonyl und verzweigtem Nonyl ausgewählt sind.

4. Der Küpenfarbstoff nach einem der Ansprüche 1 bis 3, wobei die Aminogruppe eine N-Heterocycloalkylgruppe ist, die über ein N-Atom mit einer Grundstruktur des Küpenfarbstoffs verbunden ist.

5. Der Küpenfarbstoff nach Anspruch 4, wobei die N-Heterocycloalkylgruppe 3 bis etwa 8 Ringglieder aufweist.

6. Der Küpenfarbstoff nach Anspruch 4 oder 5, wobei die N-Heterocycloalkylgruppe 1 bis 3 Ringatome, die aus N, O und S ausgewählt sind, aufweist, vorausgesetzt, dass mindestens ein Ringatom N ist.

7. Der Küpenfarbstoff nach Anspruch 6, wobei die N-Heterocycloalkylgruppe der Rest einer Verbindung ist, die aus gegebenenfalls substituiertem Azacyclooctan, gegebenenfalls substituiertem Azepan, gegebenenfalls substituiertem Piperidin, gegebenenfalls substituiertem Piperazin, gegebenenfalls substituiertem Pyrrolidin, gegebenenfalls substituiertem Azetidin, gegebenenfalls substituiertem Aziridin, gegebenenfalls substituiertem Morpholin, gegebenenfalls substituiertem Oxazolidin, gegebenenfalls substituiertem Pyrazolidin, gegebenenfalls substituiertem Isopyrazolidin, gegebenenfalls substituiertem Isoxazolidin und gegebenenfalls substituiertem Thiazolidin ausgewählt ist, wobei ein oder mehrere Substituenten jeweils aus C₁-C₄-Alkoxy- und C₁-C₆-Alkylgruppen ausgewählt sind.

8. Der Küpenfarbstoff nach einem der Ansprüche 1 bis 7, wobei der Küpenfarbstoff eine Grundstruktur nach einer der folgenden Formeln (1) bis (6) und (10) bis (11) aufweist:

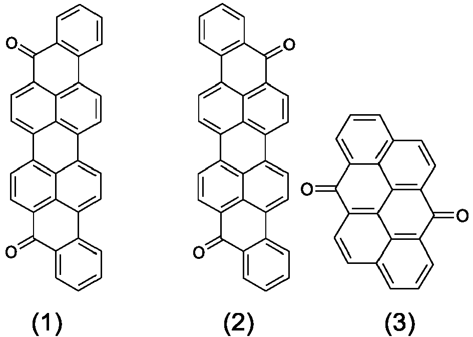

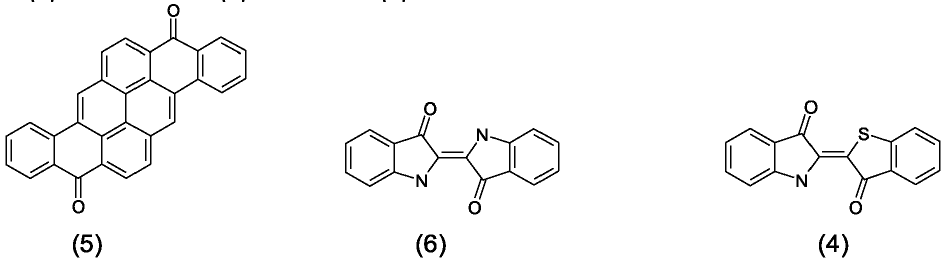

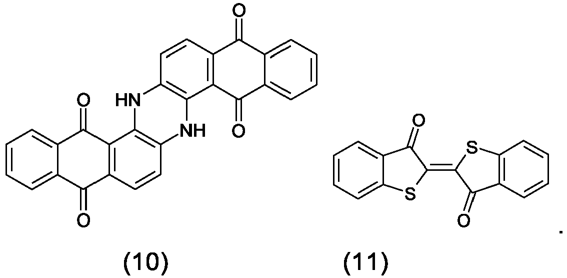

9. Ein Verfahren zur Herstellung des Küpenfarbstoffs nach einem der Ansprüche 1 bis 8, wobei das Verfahren die Reaktion eines Küpenfarbstoffs, der mindestens eine Abgangsgruppe aufweist, in einem polaren aprotischen Lösungsmittel und in Anwesenheit von mindestens einer von einer anorganischen Base und einer starken organischen nicht nukleophilen Base mit einer polymeren Verbindung der Formel (K) aufweist: 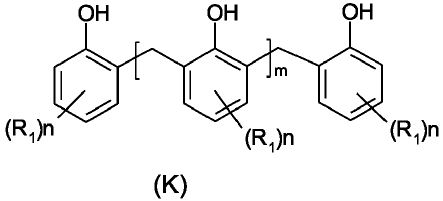
wobei die Gruppen R₁, die gleich oder voneinander verschieden sind, aus C₁-C₁₀-Alkyl und C₁-C₄-Alkoxy ausgewählt sind;
m eine ganze Zahl von 1 bis etwa 30 darstellt;
n eine ganze Zahl von 1 bis etwa 3 darstellt.

10. Eine Zusammensetzung zum Färben von Textilien oder zum Bedrucken, wobei die Zusammensetzung ein polares flüssiges Medium und mindestens einen polymergebundenen Küpenfarbstoff nach einem der Ansprüche 1 bis 8, gelöst oder dispergiert in dem Medium, aufweist.

11. Die Zusammensetzung nach Anspruch 10, wobei die Zusammensetzung etwa 0,01 Gew.-% bis etwa 40 Gew.-% des mindestens einen polymergebundenen Küpenfarbstoffs aufweist, bezogen auf das Gesamtgewicht der Zusammensetzung.

12. Eine Markierung oder ein Sicherheitsmerkmal, das mit der Zusammensetzung zum Bedrucken nach einem der Ansprüche 10 und 11 hergestellt ist.

13. Die Markierung oder das Sicherheitsmerkmal nach Anspruch 12, wobei die Markierung oder das Sicherheitsmerkmal mindestens eines der Folgenden aufweist: einen Faden, eine Faser, ein Etikett, einen Strichcode, einen 2D-Code, ein Muster, ein Kennzeichen, einen digitalen Stempel, eine Punktwolke und eine Datenmatrix.

14. Ein Artikel, der die Markierung oder das Sicherheitsmerkmal nach einem der Ansprüche 12 und 13 aufweist.

15. Der Artikel nach Anspruch 14, wobei die Markierung oder das Sicherheitsmerkmal als eine Schicht auf dem Artikel vorhanden ist.

16. Der Artikel nach einem der Ansprüche 14 und 15, wobei es sich bei dem Artikel um mindestens eine Dose, ein Metall, eine Aluminiumfolie, eine Patrone, eine Kapsel, einen Artikel aus Glas, einen Artikel aus Keramik, eine Verpackung, eine Banknote, einen Pass, ein Sicherheitsdokument, ein Wertdokument, einen Ticket, einen Faden, eine Faser, ein Etikett, eine Karte, eine Handelsware und eine Zigarettenverpackung handelt, die kodierte oder verschlüsselte Informationen tragen kann oder nicht.

17. Ein Verfahren zur Authentifizierung eines Artikels, wobei das Verfahren das Versehen des Artikels mit der Markierung oder dem Sicherheitsmerkmal nach einem der Ansprüche 12 und 13 und/oder das Aufbringen einer Druckfarbenzusammensetzung nach einem der Ansprüche 10 und 11 auf den Artikel aufweist.

18. Das Verfahren nach Anspruch 17, wobei es sich bei dem Artikel um mindestens eine Dose, ein Metall, eine Aluminiumfolie, eine Patrone, eine Kapsel, einen Artikel aus Glas, einen Artikel aus Keramik, eine Verpackung, eine Banknote, einen Pass, ein Sicherheitsdokument, ein Wertdokument, einen Fahrschein, einen Faden, ein Etikett, eine Karte, eine Handelsware und eine Zigarettenverpackung handelt, die kodierte oder verschlüsselte Informationen tragen kann oder nicht.

19. Ein Gewebe oder eine Faser, die mit der Zusammensetzung nach einem der Ansprüche 10 und 11 gefärbt ist.

20. Das Gewebe oder die Faser nach Anspruch 19, wobei das Gewebe oder die Faser Naturfasern und/oder synthetische Fasern aufweist.

21. Das Gewebe oder die Faser nach Anspruch 20, wobei das Gewebe oder die Faser aufweist: eines oder mehrere aus Wolle, Baumwolle, Seide, Leinen, Hanf und Jute, und/oder eines oder mehrere aus einem Polyester, einem Polyamid, einem Aramid, einem Polyacrylnitril, einem Acryl und einem Polyolefin.

22. Ein Polymer der Formel (K), wobei mindestens etwa 0,1 % der Polymermoleküle 1 bis 4 Reste eines oder mehrerer Küpenfarbstoffe nach Anspruch 1, die über O-Atome mit dem Polymermolekül verbunden sind, an sich gebunden haben 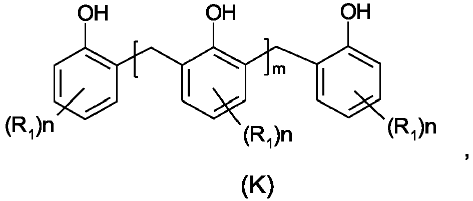
wobei in der Formel (K) die Gruppen R₁, die gleich oder voneinander verschieden sind, aus C₁-C₁₀-Alkyl und C₁-C₄-Alkoxy ausgewählt sind;
m eine ganze Zahl von 1 bis etwa 30 darstellt;
n eine ganze Zahl von 1 bis etwa 3 darstellt.

## Revendications

1. Colorant de cuve, dans lequel le colorant de cuve est lié par liaison covalente par l'intermédiaire d'un atome d'oxygène à un fragment polymère qui est dérivé d'une résine phénolique, dans lequel le fragment polymère lié par liaison covalente par l'intermédiaire d'un atome d'oxygène au colorant de cuve est un groupe de formule PO-, dans lequel P-O- est un résidu d'un composé de formule : 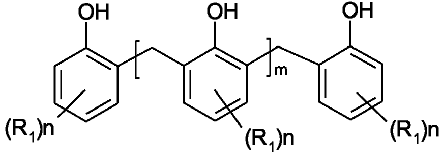
dans lequel les groupes R₁, identiques ou différents les uns des autres, sont sélectionnés parmi un C₁-C₁₀-alkyle et un C₁-C₄-alcoxy ;
m représente un nombre entier de 1 à environ 30 ;
n représente un nombre entier de 1 à environ 3 ; et
dans lequel le colorant de cuve est sélectionné parmi les composés de formules générales (A) à (G) : 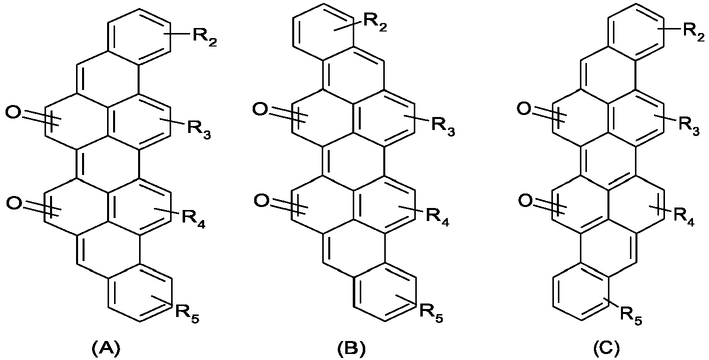 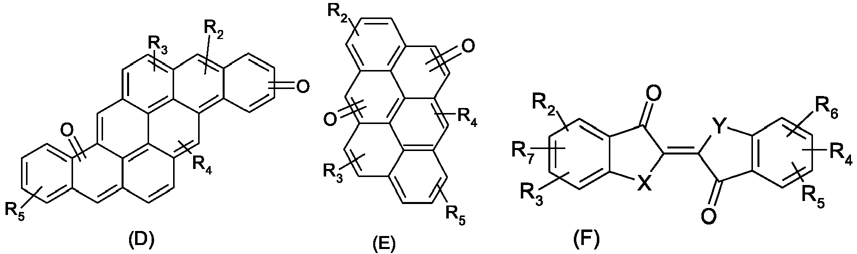 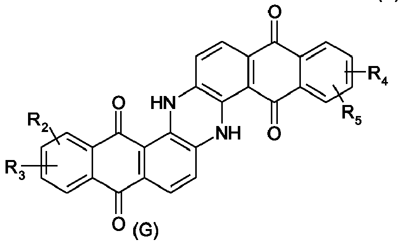
dans lequel R₂, R₃, R₄, R₅, R₆, et R₇ représentent indépendamment un hydrogène, un halogène, un C₁-C₆-alkyle, un C₁-C₄-alcoxy, un nitro, un cyano, -SO₃H, -COOH, ou un groupe amino ; et
X et Y sont sélectionnés indépendamment parmi NR' et S, dans lequel R' représente un hydrogène, un C₁-C₆-alkyle ou un C₆-C₁₀-aryle.

2. Colorant de cuve selon la revendication 1, dans lequel les groupes R₁ sont sélectionnés indépendamment parmi un C₁-C₁₀-alkyle.

3. Colorant de cuve selon la revendication 1 ou 2, dans lequel les groupes R₁ sont sélectionnés indépendamment parmi un isopropyle, un tert-butyle, un tert-octyle, un n-nonyle, et un nonyle ramifié.

4. Colorant de cuve selon l'une quelconque des revendications 1 à 3, dans lequel le groupe amino est un groupe N-hétérocycloalkyle qui est lié à une structure de base du colorant de cuve par l'intermédiaire d'un atome N.

5. Colorant de cuve selon la revendication 4, dans lequel le groupe N-hétérocycloalkyle comprend de 3 à environ 8 éléments de cycle.

6. Colorant de cuve selon la revendication 4 ou 5, dans lequel le groupe N-hétérocycloalkyle comprend de 1 à 3 atomes de cycle sélectionnés parmi N, O et S, à condition qu'au moins un atome de cycle soit N.

7. Colorant de cuve selon la revendication 6, dans lequel le groupe N-hétérocycloalkyle est le résidu d'un composé sélectionné parmi un azacyclooctane facultativement substitué, un azépane facultativement substitué, une pipéridine facultativement substituée, une pipérazine facultativement substituée, une pyrrolidine facultativement substituée, une azétidine facultativement substituée, une aziridine facultativement substituée, une morpholine facultativement substituée, une oxazolidine facultativement substituée, une pyrazolidine facultativement substituée, une isopyrazolidine facultativement substituée, une isoxazolidine facultativement substituée, et une thiazolidine facultativement substituée, un ou plusieurs substituants étant sélectionnés chacun parmi les groupes C1-C4-alcoxy et C1-C6-alkyle.

8. Colorant de cuve selon l'une quelconque des revendications 1 à 7, dans lequel le colorant de cuve présente une structure de base de l'une des formules (1) à (6), et (10) à (11) suivantes :

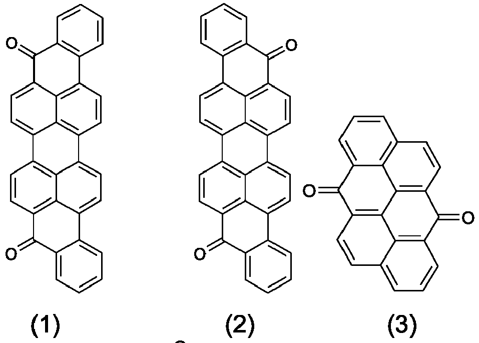

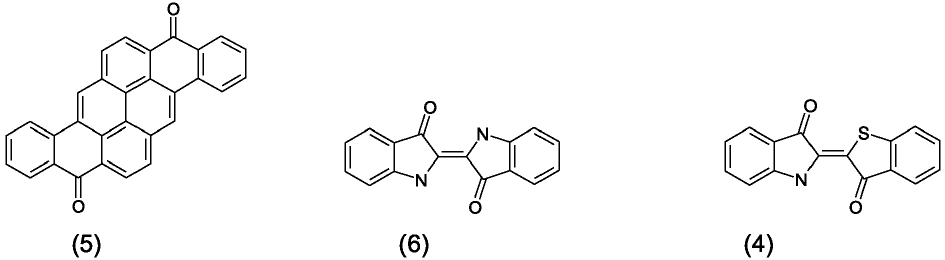

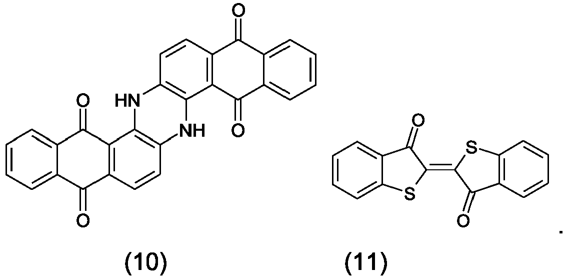

9. Procédé de préparation du colorant de cuve selon l'une quelconque des revendications 1 à 8, dans lequel le procédé comprend la réaction, dans un solvant aprotique polaire et en présence d'au moins une base parmi une base inorganique et une base organique forte non nucléophile, d'un colorant de cuve qui comprend au moins un groupe partant avec un composé polymère de formule (K) : 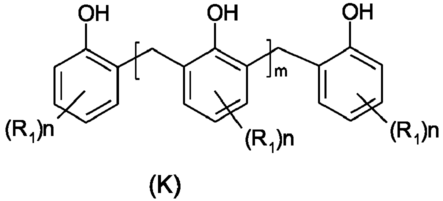
dans lequel les groupes R₁, identiques ou différents les uns des autres, sont sélectionnés parmi un C₁-C₁₀-alkyle et un C₁-C₄-alcoxy ;
m représente un nombre entier de 1 à environ 30 ;
n représente un nombre entier de 1 à environ 3.

10. Composition pour teindre les textiles ou pour impression, dans laquelle la composition comprend un milieu liquide polaire et au moins un colorant de cuve lié à un polymère selon l'une quelconque des revendications 1 à 8 dissous ou dispersé dans le milieu.

11. Composition selon la revendication 10, dans laquelle la composition comprend environ 0,01 % à environ 40 % en poids de l'au moins un colorant de cuve lié à un polymère, sur la base d'un poids total de la composition.

12. Marquage ou élément de sécurité qui est fabriqué avec la composition pour impression selon l'une quelconque des revendications 10 et 11.

13. Marquage ou élément de sécurité selon la revendication 12, dans lequel le marquage ou l'élément de sécurité comprend au moins l'un parmi un fil, une fibre, une étiquette, un code-barres, un code 2D, un motif, un signe, un timbre numérique, un nuage de points, et une matrice de données.

14. Article qui comprend le marquage ou l'élément de sécurité selon l'une quelconque des revendications 12 et 13.

15. Article selon la revendication 14, dans lequel le marquage ou l'élément de sécurité est présent sous la forme d'une couche sur l'article.

16. Article selon l'une quelconque des revendications 14 et 15, dans lequel l'article est au moins l'un parmi une canette, un métal, une feuille d'aluminium, une cartouche, une capsule, un article en verre, un article en céramique, un emballage, un billet de banque, un passeport, un document de sécurité, un document de valeur, un ticket, un fil, une fibre, une étiquette, une carte, un produit commercial, et un emballage de cigarette qui peut ou non porter des informations codées ou chiffrées.

17. Procédé d'authentification d'un article, dans lequel le procédé comprend la fourniture à l'article du marquage ou de l'élément de sécurité selon l'une quelconque des revendications 12 et 13 et/ou l'application sur l'article d'une composition d'encre d'impression selon l'une quelconque des revendications 10 et 11.

18. Procédé selon la revendication 17, dans lequel l'article est au moins l'un parmi une canette, un métal, une feuille d'aluminium, une cartouche, une capsule, un article en verre, un article en céramique, un emballage, un billet de banque, un passeport, un document de sécurité, un document de valeur, un ticket, un fil, une étiquette, une carte, un produit commercial, et un emballage de cigarette qui peut ou non porter des informations codées ou chiffrées.

19. Tissu ou fibre qui est teint avec la composition selon l'une quelconque des revendications 10 et 11.

20. Tissu ou fibre selon la revendication 19, dans lequel le tissu ou la fibre comprend des fibres naturelles et/ou des fibres synthétiques.

21. Tissu ou fibre selon la revendication 20, dans lequel le tissu ou la fibre comprend : un ou plusieurs éléments parmi la laine, le coton, la soie, le lin, le chanvre, et la jute, et/ou un ou plusieurs éléments parmi un polyester, un polyamide, un aramide, un polyacrylonitrile, un acrylique, et une polyoléfine.

22. Polymère de formule (K), dans lequel au moins environ 0,1 % des molécules de polymère présentent 1 à 4 résidus liés à celles-ci d'un ou de plusieurs colorants de cuve selon la revendication 1 qui sont liés à la molécule de polymère par l'intermédiaire d'atomes O 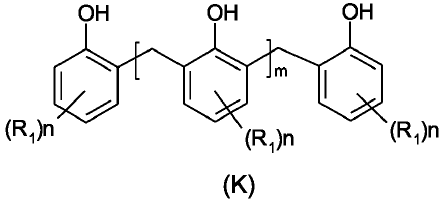
dans lequel, dans la formule (K), les groupes R₁, identiques ou différents les uns des autres, sont sélectionnés parmi un C₁-C₁₀-alkyle et un C₁-C₄-alcoxy ;
m représente un nombre entier de 1 à environ 30 ;
n représente un nombre entier de 1 à environ 3.
